# EUROPEAN PATENT APPLICATION

(11) **EP 4 786 143 A1**
(43) Date of publication of application: **05.08.2026**
(21) Application number: 24872160.7
(22) Date of filing: 24.09.2024
(51) Int. Cl.: B29C 64/106, B29C 64/40, B33Y 70/00

(54) **METHOD FOR MANUFACTURING THREE-DIMENSIONAL-SHAPED ARTICLE AND INK SET FOR PRODUCTION OF THREE-DIMENSIONAL-SHAPED ARTICLE**

(30) Priority: 25.09.2023 JP 2023161500
(71) Applicant: The University of Osaka, Osaka 565-0871 (JP); NAGASE CHEMTEX CORPORATION, Osaka-shi, Osaka 550-8668 (JP)
(72) Inventor: SAKAI, Shinji, Suita-shi, Osaka 5650871 (JP); KOTANI, Takashi, Suita-shi, Osaka 5650871 (JP); NAGANO, Toyohiro, Tatsuno-shi, Hyogo 6794124 (JP); NAKAMURA, Daisuke, Tatsuno-shi, Hyogo 6794124 (JP)
(74) Representative: Klöckner, Christoph
(86) International application number: PCT/JP2024/033888
(87) International publication number: WO 2025/070369

(57) **Abstract**

Provided are a method for producing a three-dimensional object and an ink set for producing a three-dimensional object, which can produce even, for example, a complex-shaped three-dimensional object made of a soft material with good fabrication accuracy. The present invention relates to a method for producing a three-dimensional object, the method including individually discharging (a) a model material ink containing an ionically crosslinkable polymer and (b) a support material ink containing a support material and a crosslinking factor, curing the discharged ionically crosslinkable polymer, and removing an object of the support material ink.

## Description

### TECHNICAL FIELD

The present invention relates to a method for producing a three-dimensional object and an ink set for producing a three-dimensional object. Specifically, the present invention relates to a method for producing a three-dimensional object, which is suitable for producing a complex-shaped three-dimensional object made of a soft material particularly in regenerative medicine and other fields.

### BACKGROUND ART

Technologies for producing three-dimensional objects using fabrication devices called 3D printers have been studied with a view to practical use in various fields. For example, in the field of regenerative medicine, there is a need to produce complex-shaped three-dimensional objects with bridges or holes made of soft materials for use as artificial organs. When trying to produce such a three-dimensional object from a bioink using a 3D printer, the bioink may flow out (drip), resulting in collapse before gelling, or deformation may occur under gravity. Thus, improved fabrication accuracy is requested.

Patent Literature 1 discloses that, with a view to application in regenerative medicine and other fields, a silk nanofiber may be added to an ink that is for 3D printing systems and contains a natural polymer and/or a synthetic polymer to allow the ink to have a low viscosity when discharged from a nozzle so that the ink can be discharged at a lower pressure, and also to allow the ink to have a high viscosity after printed on a substrate so that deformation of the object can be sufficiently prevented. Meanwhile, there have been a desire to further widen the selection of materials and a desire to develop new methods for producing three-dimensional objects.

### CITATION LIST

### - Patent Literature

Patent Literature 1: JP 2020-156357 A

### SUMMARY OF INVENTION

### - Technical Problem

The present invention aims to provide a method for producing a three-dimensional object and an ink set for producing a three-dimensional object, which can produce even, for example, a complex-shaped three-dimensional object made of a soft material with good fabrication accuracy.

### - Solution to Problem

As a result of extensive studies, the present inventors found that even, for example, a complex-shaped three-dimensional object made of a soft material can be produced with good fabrication accuracy by individually discharging a model material ink containing an ionically crosslinkable polymer and a support material ink containing a support material and a crosslinking factor, curing the discharged ionically crosslinkable polymer, and removing an object of the support material ink.

Specifically, Embodiment 1 of the present invention relates to a method for producing a three-dimensional object, the method including:
individually discharging (a) a model material ink containing an ionically crosslinkable polymer and (b) a support material ink containing a support material and a crosslinking factor;
curing the discharged ionically crosslinkable polymer; and
removing an object of the support material ink.

Embodiment 2 of the present invention relates to the method for producing a three-dimensional object according to Embodiment 1 of the present invention,
wherein the support material contains an enzymatically degradable polymer.

Embodiment 3 of the present invention relates to the method for producing a three-dimensional object according to Embodiment 2 of the present invention,
wherein the removing an object of the support material ink includes removing the object of the support material ink (b) by interaction with an enzyme.

Embodiment 4 of the present invention relates to an ink set for producing a three-dimensional object, the ink set including:
(a) a model material ink containing an ionically crosslinkable polymer; and
(b) a support material ink containing a support material and a crosslinking factor.

Embodiment 5 of the present invention relates to the ink set for producing a three-dimensional object according to Embodiment 4 of the present invention,
wherein the support material ink (b) contains an enzymatically degradable polymer.

Embodiment 6 of the present invention relates to a method for producing a three-dimensional object, the method including:
individually discharging (a) a model material ink containing a crosslinkable polymer and (b) a support material ink containing an enzymatically degradable polymer and a crosslinking factor;
crosslinking the discharged crosslinkable polymer; and
removing an object of the support material ink using an enzyme.

Embodiment 7 of the present invention relates to an ink set for producing a three-dimensional object, the ink set including:
(a) a model material ink containing a crosslinkable polymer; and
(b) a support material ink containing an enzymatically degradable polymer and a crosslinking factor.

Embodiment 8 of the present invention relates to an ink set for producing a three-dimensional object, the ink set including:
(a) a model material ink containing a crosslinkable polymer; and
(b) a support material ink containing an enzymatically degradable polymer,
the ink set being for use in forming a layered structure by alternately discharging the model material ink (a) and the support material ink (b).

### - Advantageous Effects of Invention

The present invention can produce even, for example, a complex-shaped three-dimensional object made of a soft material with good fabrication accuracy.

### BRIEF DESCRIPTION OF DRAWINGS

FIG. 1 shows schematic diagrams illustrating steps for producing a three-dimensional object with a bridge according to the method for producing a three-dimensional object of the present invention.
FIG. 2 shows photographs of a three-dimensional object prepared in Example 1.
FIG. 3 shows photographs of a three-dimensional object in Example 1 immediately after printing, after one-hour immersion in an enzyme solution, and after three-hour immersion in the enzyme solution.
FIG. 4 shows photographs of a three-dimensional object prepared in Example 2.
FIG. 5 shows photographs of a three-dimensional object prepared in Comparative Example 1.
FIG. 6 shows photographs of a three-dimensional object prepared in Example 3.
FIG. 7 shows photographs of three-dimensional objects prepared in Examples 4 to 6.
FIG. 8 shows photographs of three-dimensional objects prepared in Examples 7 and 8 and Comparative Example 2.
FIG. 9 shows schematic diagrams illustrating steps for producing a three-dimensional object further using a second support material ink in the method for producing a three-dimensional object of the present invention.
FIG. 10 shows schematic diagrams illustrating another example of the steps illustrated in FIG. 9.
FIG. 11 shows schematic diagrams illustrating yet another example of the steps illustrated in FIG. 9.

### DESCRIPTION OF EMBODIMENTS

<<First method for producing three-dimensional object>>

The first method for producing a three-dimensional object of the present invention includes individually discharging (a) a model material ink containing an ionically crosslinkable polymer and (b) a support material ink containing a support material and a crosslinking factor, curing the discharged ionically crosslinkable polymer, and removing an object of the support material ink.

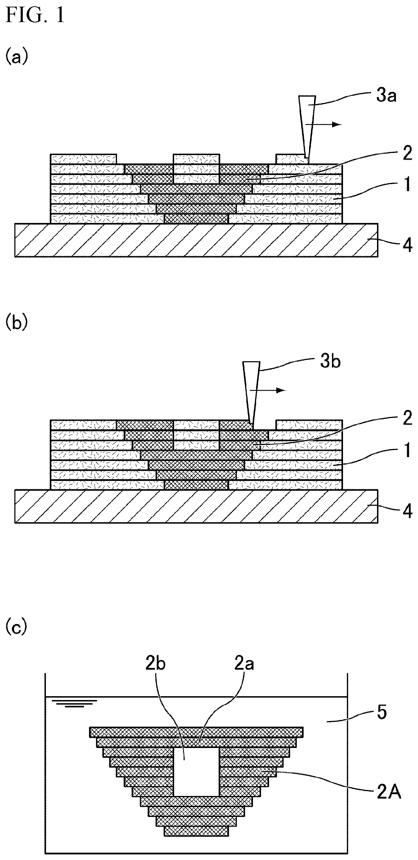

The method for producing a three-dimensional object of the present invention is briefly described below with reference to FIG. 1. FIG. 1 shows schematic diagrams illustrating steps for producing a three-dimensional object with a bridge according to the method for producing a three-dimensional object of the present invention. FIG. 1(a) schematically shows discharge of a support material ink 1 from a nozzle 3a of a 3D printer. FIG. 1(b) schematically shows discharge of a model material ink 2 from a nozzle 3b of the 3D printer. Here, the nozzle 3a and the nozzle 3b may be the same nozzle but are preferably different nozzles. Here, the support material ink 1 is discharged, and then the model material ink 2 is discharged to a location surrounded by the support material ink 1, whereby one layer can be formed. This process is repeated to provide a layered structure.

As shown in FIG. 1(a) and FIG. 1(b), the discharged support material ink 1 and the discharged model material ink 2 are in contact with each other. For example, when the support material ink 1 contains a crosslinking factor together with a support material, the crosslinking factor may be supplied from the discharged support material ink 1 to the discharged model material ink 2 to crosslink the ionically crosslinkable polymer in the discharged model material ink 2, causing the model material ink 2 to become a gel. FIG. 1(c) shows the step after completion of the gelling of the model material ink 2, specifically the step of immersing the resulting object in a solution 5 for removing the object of the support material ink 1 to remove the object of the support material ink 1. The removal of the object of the support material ink 1 enables production of a complex-shaped three-dimensional object 2A (object of the model material ink) with a bridge 2a and a hole 2b.

In the method for producing a three-dimensional object of the present invention, a three-dimensional object may be produced by discharging the model material ink and the support material ink into a circular cylindrical vessel such as a beaker or a petri dish, a rectangular cylindrical vessel, or a vessel of any other shape. The inner wall of the vessel serves as a support for the model material ink and/or the support material ink, enabling the production of a taller object. Here, the vessel may be made of any material that can serve as a support for the model material ink and/or the support material ink, and may be made of glass, resin, or other suitable materials. Moreover, the vessel may be produced by three-dimensional fabrication.

### <Step of individually discharging (a) model material ink containing ionically crosslinkable polymer and (b) support material ink containing support material and crosslinking factor>

In the discharging step, for example, the model material ink (a) and the support material ink (b) containing a support material and a crosslinking factor each may be discharged from a nozzle of a 3D printer onto a target site on a substrate, for example. When a 3D printer is used in the ink discharging step, the 3D printer may be of any type such as an inkjet, laser, or extrusion 3D printer, but it is preferably an extrusion 3D printer. The nozzle for discharging the model material ink (a) is preferably different from the nozzle for discharging the support material ink (b).

### ((a) Model material ink containing ionically crosslinkable polymer)

The model material ink (a) contains an ionically crosslinkable polymer and can become a gel when the ionically crosslinkable polymer is ionically crosslinked by the crosslinking factor contained in the support material ink. The term "ionically crosslinkable polymer" refers to a polymer having a functional group, such as a carboxyl group or a sulfonic acid group, that is interactive with divalent metal ions such as calcium, magnesium, iron(II), zinc, copper, manganese, strontium, and barium ions, and trivalent metal ions such as aluminum and iron(III) ions. Such a functional group may be either inherently present in the polymer or introduced into the polymer.

Non-limiting examples of the ionically crosslinkable polymer include polysaccharides, nucleic acids, carbohydrates, proteins, polypeptides, poly(α-hydroxy acids), polylactones, polyamino acids, polyanhydrides, polyorthoesters, poly(anhydride-co-imide), polyorthocarbonates, poly(α-hydroxyalkanoate), polydioxanone, polyphosphoesters, polylactic acid, poly(L-lactide) (PLLA), poly(D,L-lactide) (PDLLA), polyglycolic acid, polyglycolide (PGA), poly(lactide-co-glycolide) (PLGA), poly(L-lactide-co-D,L-lactide), poly(D,L-lactide-co-trimethylene carbonate), polyhydroxybutyrate (PHB), poly(ε-caprolactone), poly(δ-valerolactone), poly(γ-butyrolactone), polycaprolactone, poly(meth)acrylic acid, polycarboxylic acids, polyallylamine hydrochloride, polydiallyldimethylammonium chloride, polyalkyleneimines such as polyethyleneimine, polypropylene fumarate, polyvinyl alcohol, polyvinylpyrrolidone, polyalkylenes such as polyethylene, polymethyl methacrylate, carbon fibers, polyalkylene glycols such as polyethylene glycol, polyalkylene oxides such as polyethylene oxide, polyvinyl alcohol, polyvinylpyrrolidone, polyethyloxazoline, poly(ethylene oxide)-co-poly(propylene oxide) block copolymers, poly(ethylene terephthalate) polyamides, and salts of these polymers. In the case where any of these polymers has no ionically crosslinkable group, an ionically crosslinkable group may be introduced to the polymer, and the resulting polymer may be used as an ionically crosslinkable polymer.

Examples of the polysaccharides include cellulose, hemicellulose, dextran, hyaluronic acid, chitin, chitosan, alginic acid, polyglucuronic acid, gellan gum, xanthan gum, chondroitin sulfate, starch, pullulan, carrageenan, curdlan, fucoidan, amylose, amylopectin, pectin, salts thereof such as alkali metal salts thereof, and derivatives thereof. Examples of the derivatives of the polysaccharides include carboxymethylcellulose, methylcellulose, deacetylated chitins, and deacetylated chitosans.

Examples of the proteins include simple proteins such as albumin, globulin, prolamin, glutelin, histone, protamine, and scleroproteins, e.g., fibroin; complex proteins such as nucleoproteins, glycoproteins, chromoproteins, and phosphoproteins; and derived proteins such as gelatin, proteose, and peptone.

Non-limiting examples of the salts as the salts of the ionically crosslinkable polymer include acid addition salts, metal salts, ammonium salts, and organic amine salts. Examples of the acid addition salts include inorganic acid salts such as hydrochlorides, sulfates, and phosphates; and organic acid salts such as acetates, maleates, fumarates, tartrates, and citrates. Examples of the metal salts include alkali metal salts such as sodium salts and potassium salts, alkaline earth metal salts such as calcium salts and magnesium salts, aluminum salts, and zinc salts. Examples of the organic amine salts include salts of morpholine, piperidine, or other organic amines.

The ionically crosslinkable polymer is preferably a polysaccharide or a protein because it is easily available and can impart good properties to the resulting three-dimensional object. A polysaccharide is more preferred. One type or a combination of two or more types of the above-described ionically crosslinkable polymer base materials may be used.

The concentration of the ionically crosslinkable polymer in the model material ink (a) is usually 0.1 to 30% by mass, preferably 0.5 to 20% by mass, more preferably 0.75 to 10% by mass. If the concentration of the ionically crosslinkable polymer is lower than 0.1% by mass, the resulting three-dimensional object may have insufficient strength. If the concentration of the ionically crosslinkable polymer is higher than 30% by mass, the model material ink may have too high a viscosity, which may increase the pressure when the ink is discharged from the nozzle, possibly affecting the quality of the model material ink (a). The concentration of the crosslinkable polymer in the model material ink (a) is usually 0.1 to 30 w/v% (g/100 mL), preferably 0.5 to 20 w/v% (g/100 mL), more preferably 0.75 to 10 w/v% (g/100 mL).

The model material ink (a) may contain other components in addition to the ionically crosslinkable polymer. Examples of such other components include various cells, solvents, chain transfer agents, plasticizers, pH adjusters, buffers, preservatives, solvents, ultraviolet absorbers, coloring materials, and surfactants. Examples of the solvents include water, phosphate-buffered saline (PBS), and mixtures of water and organic solvents. Non-limiting examples of the organic solvents include ethanol, glycerol, and dimethylsulfoxide.

The model material ink (a) is preferably liquid at room temperature. The model material ink (a) which is liquid at room temperature can be easily discharged using a 3D printer or similar devices. The model material ink (a) may have any viscosity at 20°C, but preferably has a viscosity at 20°C of 10 mPa·s or higher, more preferably 20 mPa·s or higher, still more preferably 50 mPa·s or higher. The viscosity is also preferably 100000 mPa·s or lower, more preferably 10000 mPa·s or lower, still more preferably 2000 mPa·s or lower. Since the production method of the present invention can sufficiently prevent flowing (dripping) of the model material ink (a) before gelling, a model material ink (a) with a low viscosity can be suitably used. Here, the viscosity is measured using a cone and plate E-type viscometer at a rotation rate of 20 rpm.

The model material ink (a) can be produced by mixing the above-described ionically crosslinkable polymer and optionally other components.

### ((b) Support material ink containing support material and crosslinking factor)

The support material ink (b) may be crosslinked to retain its shape and form an object after discharged. For convenience, the support material ink (b) is preferably capable of retaining its shape by itself and directly forming an object. An object of the support material ink (b) can retain the shape of the model material ink (a) until the model material ink (a) sufficiently becomes a gel, thereby preventing flowing (dripping) of the model material ink (a) or deformation of the model material ink (a) under gravity. After the model material ink (a) becomes a gel, the object of the support material ink (b) is removed as described later.

The support material contained in the support material ink (b) is a polymer such as a natural polymer or a synthetic polymer. Examples of the polymer include polysaccharides, nucleic acids, carbohydrates, proteins, polypeptides, polyamino acids, polylactic acid, polyalkylene oxides such as polyethylene oxide, polyalkyleneimines such as polyethyleneimine, polyvinylpyrrolidone, polyalkylene glycols such as polyethylene glycol, methylcellulose, hydroxyethylcellulose, albumin, gelatin, collagen, silk fibroin, polyvinyl alcohol, and salts of these polymers. Preferred among these polymers are polysaccharides, nucleic acids, carbohydrates, proteins, polypeptides, polyamino acids, polylactic acid, polyethylene oxide, polyethyleneimine, polyvinylpyrrolidone, polyethylene glycol, albumin, gelatin, collagen, polyvinyl alcohol, and salts of these polymers. The polysaccharides, the proteins, and the salts as the salts of the polymers are the same as the polysaccharides, the proteins, and the salts in the salts of the polymer base materials, respectively, described for the polymer base material. Moreover, the support material may be obtained by crosslinking any of the above-described polymers with a crosslinker.

The support material preferably contains an enzymatically degradable polymer, a water-soluble polymer, or a water-dispersible polymer. The presence of such a polymer enables, in the step of removing the object of the support material ink (b), easy removal of the object under mild conditions using an enzyme solution, water, or an aqueous solution as described later. Herein, the solubility of the water-soluble polymer in 100 g of water at 20°C is not limited, but it is preferably 1 g or more, more preferably 5 g or more.

The enzymatically degradable polymer preferably forms a polymer hydrogel after being discharged, and the formed polymer hydrogel preferably aggregates or becomes less viscous upon interacting with an enzyme. Examples of such an enzymatically degradable polymer include methylcellulose, carboxymethylcellulose, starch, dextran, carrageenan, chitin, chitosan, polycaprolactone, and derivatives thereof having been modified to facilitate gel formation. Examples of the enzyme include cellulase, amylase, lipase, dextranase, carrageenase, alginate lyase, hyaluronidase, chitinase, and chitosanase. The enzyme should be able to degrade the enzymatically degradable polymer used.

The water-soluble polymer or the water-dispersible polymer preferably forms a polymer hydrogel after being discharged, and the formed polymer hydrogel preferably degrades, aggregates, or becomes less viscous upon interacting with a chemical agent. Here, the water-soluble polymer or the water-dispersible polymer preferably does not interact with an ionic compound because the support material contains an ionic crosslinker such as calcium.

The concentration of the support material in the support material ink (b) is preferably 10% by volume or more, more preferably 50% by volume or more to further improve the pseudoplasticity of the support material ink (b). In the support material ink (b) which contains two or more types of the support materials, the above concentration means the total concentration of all the polymers contained in the support material ink.

The support material ink (b) further contains a crosslinking factor. The term "crosslinking factor" refers to a component capable of crosslinking the ionically crosslinkable polymer in the model material ink (a). Specifically, for example, the crosslinking factor is an ionic compound, and examples thereof include multivalent metal salts such as calcium salts, zinc salts, magnesium salts, barium salts, strontium salts, copper salts, iron salts, aluminum salts, and cobalt salts. Of these, calcium chloride, calcium hydroxide, calcium carbonate, and calcium lactate are preferred, with calcium chloride being more preferred.

The amount of the crosslinking factor relative to 100 parts by mass of the ionically crosslinkable polymer contained in the model material ink (a) is preferably 0.1 to 50 parts by mass, more preferably 0.5 to 30 parts by mass. The concentration of the crosslinking factor in the support material ink (b) is not limited, but it is preferably at least 0.01 mM but not higher than 1 M. The concentration is more preferably 0.1 mM or higher, still more preferably 1 mM or higher, particularly preferably 5 mM or higher.

The support material ink (b) is preferably substantially free of ionically crosslinkable polymers or ionically crosslinkable monomers to prevent ionic crosslinking of the support material ink alone in order to facilitate the removal of the object of the support material ink. The amount of ionically crosslinkable polymers or ionically crosslinkable monomers in the support material ink (b) is preferably 1% by mass or less, more preferably 0.1% by mass or less, still more preferably 0% by mass.

The support material ink (b) may contain other components in addition to the polymer as the support material and the crosslinking factor. Examples of such other components include humectants such as glycerol, pH adjusters such as alkali metal hydroxides and organic amines, preservatives, coloring materials, solvents, plasticizers, ultraviolet absorbers, and surfactants. Examples of the solvents include water, phosphate-buffered saline (PBS), and mixtures of water and organic solvents. Non-limiting examples of the organic solvents include ethanol and glycerol.

The support material ink (b) is preferably liquid or gel-like, more preferably gel-like, at room temperature. The support material ink (b) which is gel-like at room temperature can be easily fabricated using a 3D printer or similar devices. The viscosity of the support material ink (b) at a shear rate of 0.01 (1/s) at 20°C is preferably 10000 mPa·s or higher. The support material ink (b) has a viscosity of more preferably 100000 mPa·s or higher, still more preferably 500000 mPa·s or higher to retain its shape by itself. The upper limit of the viscosity is not limited, but it is usually 10000000 mPa·s or lower.

The viscosity of the support material ink (b) at a shear rate of 10 (1/s) at 20°C is preferably 10 mPa·s or higher, more preferably 100 mPa·s or higher, still more preferably 1000 mPa·s or higher. The upper limit of the viscosity is not limited, but it is usually lower than 10000 mPa·s. Here, the viscosity is measured using a viscosity/viscoelasticity measuring device available from Thermo Fisher Scientific.

The ratio of the viscosity at a shear rate of 0.01 (1/s) to the viscosity at a shear rate of 10 (1/s) of the support material ink (b) at 20°C is preferably 5 or higher, more preferably 10 or higher, still more preferably 20 or higher, particularly preferably 50 or higher. This allows the support material ink (b) to have better pseudoplasticity.

The support material ink (b) can be produced by mixing the polymer and the crosslinking factor, and optionally other components. The mixing conditions are not limited.

As described above, the production method of the present invention usually includes individually discharging, for example, the model material ink (a) and the support material ink (b) using a 3D printer to form a layer and repeating this process, thereby stacking layers. As the discharged model material ink (a) and the discharged support material ink (b) are in contact with each other, the discharged crosslinking factor crosslinks the ionically crosslinkable polymer to fabricate an object of the model material ink (a). Here, the crosslinking factor contained in the discharged support material ink (b) is supplied to the discharged model material ink (a). In the production method of the present invention, in addition to the crosslinking of the ionically crosslinkable polymer by the crosslinking factor, photocrosslinking, photocrosslinking, enzymatic crosslinking, temperature change, or other factors may contribute to the crosslinking of the crosslinkable polymer.

### (Support material ink containing second support material)

In the production method of the present invention, in conjunction with the model material ink (a) and the support material ink (b) (hereinafter also referred to as the first support material ink), a second support material ink as a support for the model material ink and the first support material ink may be discharged for the production. The second support material ink may be discharged in advance to produce a three-dimensional object (vessel or outer frame), or may be discharged in advance to produce part of a three-dimensional object (vessel or outer frame) and then discharged in conjunction with the model material ink and the first support material ink to produce the rest of the three-dimensional object. Alternatively, the entire three-dimensional object may be produced at once. Since the three-dimensional object (vessel or outer frame) produced from the second support material ink serves as a support for the model material ink and the first support material ink, the model material ink and the first support material ink can be more sufficiently prevented from collapsing, and a taller three-dimensional object can be produced if desired. Moreover, such a second support material ink may not contain a crosslinking factor. Such a second support material ink may be substituted for the first support material ink to reduce the amount of the first support material ink discharged, thereby saving the amount used of the crosslinking factor contained in the first support material ink. Here, the second support material ink may contain any second support material that can serve as a support for the model material ink and/or the support material ink, such as the support material used in the support material ink (b), glass, or resin. As described later, the object of the second support material ink can be removed in a similar way to the object of the first support material ink, if an appropriate material is selected. The model material ink may be partially or entirely in contact with the object formed of the second support material.

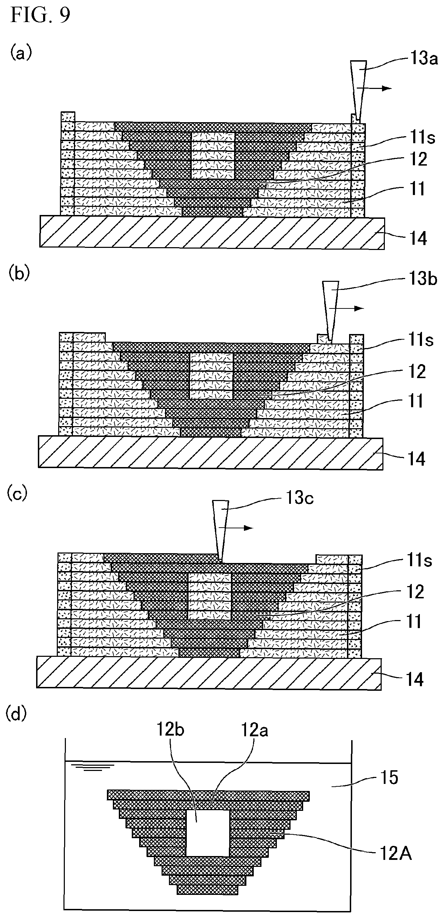

FIG. 9 shows schematic diagrams illustrating steps for producing a three-dimensional object further using the second support material ink in the method for producing a three-dimensional object of the present invention. Only the features differing from FIG. 1 are described below. FIG. 9(a) schematically shows discharge of a second support material ink 11s from a nozzle 13a of a 3D printer. FIG. 9(b) schematically shows discharge of a first support material ink 11 from a nozzle 13b of the 3D printer. FIG. 9(c) schematically shows discharge of a model material ink 12 from a nozzle 13c of the 3D printer. Here, the nozzle 13a, the nozzle 13b, and the nozzle 13c may be the same nozzle but are preferably different nozzles. In FIG. 9, the second support material ink 11s is discharged, the first support material ink 11 is discharged to a location surrounded by the second support material ink 11s, and the model material ink 12 is discharged to a location surrounded by the first support material ink 11, whereby one layer is formed. This process is repeated to provide a layered structure.

As shown in FIG. 9(a) to FIG. 9(c), the discharged second support material ink 11s is in the form of a thin wall having both even inner and outer peripheries, and is in contact with and supports the discharged first support material ink 11, and also indirectly supports the discharged model material ink 12. When the second support material ink 11s used is capable of forming a hard object, the model material ink 12 and the first support material ink 11 can be more sufficiently prevented from collapsing during the gelling or other processes. It is also possible to produce a taller three-dimensional object if desired.

FIG. 9(d), as with FIG. 1(c), shows the step of immersing, after completion of the gelling of the model material ink 12, the resulting objects in a removal solution 15 to remove the objects of the first support material ink 11 and the second support material ink 11s. This step will be described later.

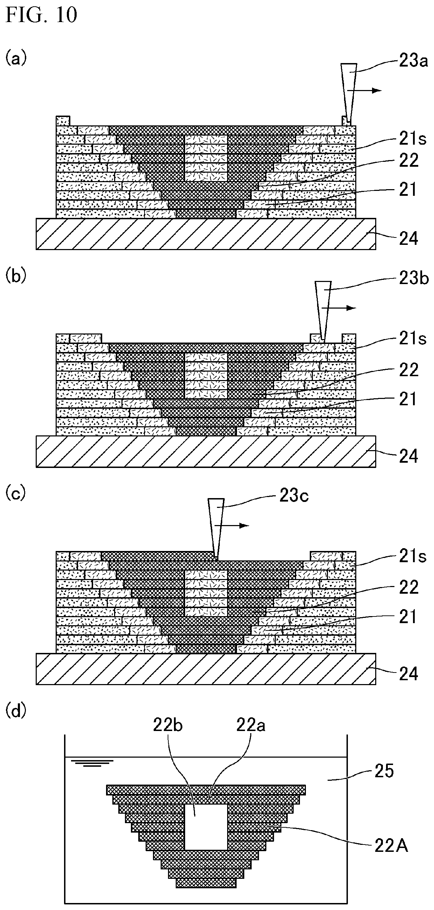

FIG. 10 is the same as the schematic diagrams shown in FIG. 9, except that the area in which a first support material ink 21 and a second support material ink 21s are discharged is changed as shown in FIG. 10. Only the features differing from FIG. 9 are described below. In FIG. 10, the second support material ink is discharged such that the inner periphery is in the form of downwardly expanding steps. Compared to FIG. 9, the second support material ink is substituted for part of the first support material ink. When the second support material ink 21s used is capable of forming a hard object and contains no first crosslinking factor, the model material ink 22 and the first support material ink 21 can be more sufficiently prevented from collapsing during the gelling or other processes, while reducing the amount of the first support material ink 21 discharged, thereby saving the amount used of the first crosslinking factor.

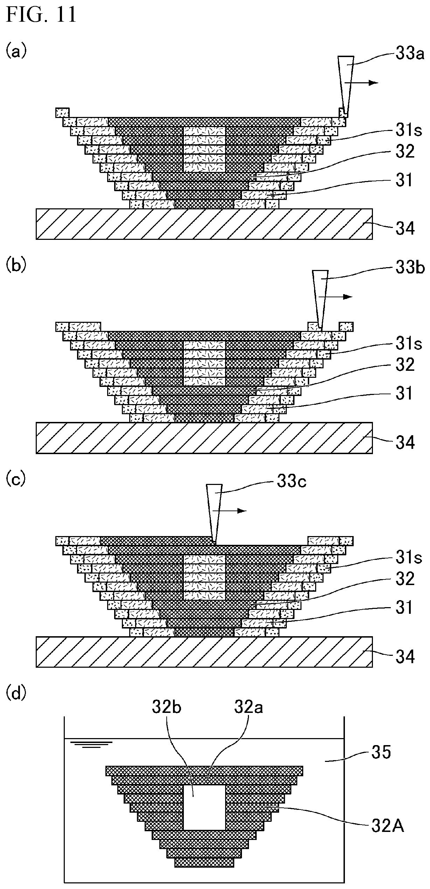

FIG. 11 is the same as the schematic diagrams shown in FIG. 10, except that the area in which a second support material ink 31s is discharged is changed as shown in FIG. 11. Only the features differing from FIG. 10 are described below. In FIG. 11, the second support material ink is discharged such that the outer periphery is in the form of upwardly expanding steps to match the shapes of the discharged model material ink 32 and the discharged first support material ink 31. Compared to FIG. 10, the amount of the second support material ink discharged can also be reduced.

### <Step of curing discharged ionically crosslinkable polymer>

In the ionic curing step, the crosslinking factor migrated from the support material ink to the model material ink layer is reacted with the ionically crosslinkable polymer in the model material ink and is cured.

### <Step of removing object of support material ink>

The step of removing an object of the support material ink is not limited as long as it can remove the object of the support material ink (b) to give the object of the model material ink (a). For example, the step can be performed by immersing and/or washing the object of the support material ink (b) in an enzyme-containing solution for removing the object of the support material ink (b). The removal step is preferably performed under mild conditions to reduce the impact on the object (three-dimensional object) of the model material ink (a). For example, the removal step is preferably performed at a temperature of 10°C to 40°C. Moreover, from the perspective of enzymatic activity, the pH at 20°C of the removal solution is preferably 2 to 10, more preferably 5 to 9. It should be noted that the object of the support material ink is made of support polymers and other components remaining after the crosslinking factor is supplied from the support material ink to the model material ink.

When the above-described second support material ink is further used in conjunction with the support material ink (b), the object of the support material ink (b) and the object of the second support material ink may be removed by the respective different methods, but preferably the object of the second support material ink is also removed along with the object of the support material ink (b) in the above removal step.

In the case where the support material includes an enzymatically degradable polymer, an aqueous solution containing an enzyme capable of removing the enzymatically degradable polymer may be used as a removal solution. In the case where the support material includes a water-soluble polymer or a water-dispersible polymer, water or an aqueous solution can be used as a removal solution. The concentration of the enzyme in the enzyme-containing removal solution is preferably 1 to 100 mg/mL.

### <Other steps>

The production method of the present invention may include, after the step of individually discharging the model material ink and the support material ink but before the step of removing the object of the support material ink, a step of allowing the discharged model material ink and the discharged support material ink to stand still so that the model material can sufficiently become a gel.

The three-dimensional object obtained by the production method of the present invention can be, for example, a complex-shaped three-dimensional object made of a soft material. In particular, it can be suitably used as an artificial organ or the like in the field of regenerative medicine. Here, the three-dimensional object may have any shape, but the three-dimensional object is suitable for a shape with a bridge and/or a hole. The dimensions of the three-dimensional object can be appropriately set.

### <<First ink set for producing three-dimensional object>>

The present invention includes (a) a model material ink containing an ionically crosslinkable polymer and (b) a support material ink containing a support material and a crosslinking factor. The ionically crosslinkable polymer, the support material, the crosslinking factor, and other components are as described above. The ink set for producing a three-dimensional object of the present invention can suitably produce a three-dimensional object according to the present invention.

### <<Second method for producing three-dimensional object>>

The second method for producing a three-dimensional object of the present invention includes individually discharging (a) a model material ink containing a crosslinkable polymer and (b) a support material ink containing an enzymatically degradable polymer and a crosslinking factor; curing the discharged crosslinkable polymer; and removing an object of the support material ink using an enzyme.

Non-limiting examples of the crosslinkable polymer contained in the model material ink (a) containing a crosslinkable polymer include a polymer crosslinkable by an enzyme, a photocrosslinkable polymer, and an ionically crosslinkable polymer. Non-limiting examples of the polymer crosslinkable by an enzyme include a polymer obtained by combining a polymer with a compound having a phenolic hydroxyl group, an amino group-containing polysaccharide, and a polyphenol. Non-limiting examples of the photocrosslinkable polymer include a polymer obtained by combining a polymer with a compound having a phenolic hydroxyl group, a (meth)acrylate group-containing polymer such as gelatin methacrylate, an amino group-containing polysaccharide, and a polyphenol. A polymer that has a photocrosslinkable functional group itself may be used as a photocrosslinkable polymer. Alternatively, a polymer may be combined with a compound having a phenolic hydroxyl group or a similar compound to introduce a photocrosslinkable functional group thereinto and then the resulting polymer may be used. The ionically crosslinkable polymer is as described above. Examples of the polymer usable as the polymer crosslinkable by an enzyme or the photocrosslinkable polymer include the polymers described above as the ionically crosslinkable polymer.

The crosslinking factor contained in the support material ink (b) containing an enzymatically degradable polymer and a crosslinking factor is a component capable of crosslinking the crosslinkable polymer contained in the model material ink (a) containing a crosslinkable polymer. In the case where the crosslinkable polymer is a polymer crosslinkable by an enzyme, examples of the crosslinking factor include hydrogen peroxide, or a hydrogen peroxide donor or a hydrogen peroxide decomposing agent. In the case where the crosslinkable polymer is a photocrosslinkable polymer, examples of the crosslinking factor include polymerization initiators such as sodium peroxodisulfate (SPS), lithium phenyl-2,4,6-trimethylbenzoylphosphinate (LAP), diphenyl-2,4,6-trimethylbenzoylphosphine oxide, and 2-hydroxy-4-(2-hydroxyethoxy)-2-methylpropiophenone.

The enzymatically degradable polymer contained in the support material ink (b) containing an enzymatically degradable polymer and a crosslinking factor is as described above. In the case where the crosslinkable polymer contained in the model material ink (a) is a polymer crosslinkable by an enzyme, the enzymatically degradable polymer is preferably a polymer that is not degraded by the enzyme.

### <<Second ink set for producing three-dimensional object>>

The second ink set for producing a three-dimensional object of the present invention includes (a) a model material ink containing a crosslinkable polymer; and (b) a support material ink containing an enzymatically degradable polymer and a crosslinking factor. The crosslinkable polymer, the enzymatically degradable polymer, the crosslinking factor, and other components are as described above. The second ink set for producing a three-dimensional object of the present invention can suitably produce a three-dimensional object according to the present invention.

### <<Third ink set for producing three-dimensional object>>

The third ink set for producing a three-dimensional object of the present invention includes (a) a model material ink containing a crosslinkable polymer; and (b) a support material ink containing an enzymatically degradable polymer, the ink set being for use in forming a layered structure by alternately discharging the model material ink (a) and the support material ink (b). The crosslinkable polymer, the enzymatically degradable polymer, and other components are as described above. The third ink set for producing a three-dimensional object of the present invention can suitably produce a three-dimensional object according to the present invention. The third ink set for producing a three-dimensional object of the present invention is optimal for forming a layered structure by alternately discharging the model material ink (a) and the support material ink (b).

### EXAMPLES

The present invention will be described below with reference to examples although the present invention is not limited to the following examples. Hereinafter, "parts" or "%" means "parts by mass" or "% by mass", respectively, unless otherwise specified.

### Production Example 1 (Model material ink 1)

Sodium alginate (KIMICA ALGIN I-3, available from KIMICA Corporation, 300-400 mPa·s) was weighed, and a Ca²⁺-free Krebs Ringer Hepes buffer (CF-KRH) was added thereto to prepare a 1.0 w/v% solution. Subsequently, fluorescent particles (fluorescent powder available from Matsuno Industry Co., Ltd.) were dispersed in the solution to prepare a model material ink 1.

### Production Example 2 (Model material ink 2)

Sodium alginate (KIMICA ALGIN I-3, available from KIMICA Corporation, 300-400 mPa·s) was weighed, and ultra-pure water was added thereto to prepare a 2.0 w/v% solution. Subsequently, fluorescent particles (fluorescent powder available from Matsuno Industry Co., Ltd.) were dispersed in the solution to prepare a model material ink 2.

### Production Example 3 (Model material ink 3)

Polyglucuronic acid was weighed, and a Ca²⁺-free Krebs Ringer Hepes buffer (CF-KRH) was added thereto to prepare a 2.0 w/v% solution. Subsequently, fluorescent particles (fluorescent powder available from Matsuno Industry Co., Ltd.) were dispersed in the solution to prepare a model material ink 3.

### Production Examples 4 to 9 (support material inks 1 to 6)

A 10 M CaCl₂ solution was added to a starch glue (Doubutu nori, FD6, available from Fuekinori Kogyo Co., Ltd.) to prepare support material inks 1 to 6 each having a starch glue concentration and a Ca²⁺ concentration indicated in Table 1.

### Production Examples 10 to 12 (Enzyme solutions 1 to 3)

α-Amylase (260-04412 available from Kishida Chemical Co., Ltd.) was weighed, and a solvent indicated in Table 1 was added thereto to prepare 1mg/mL enzyme solutions 1 to 3. In Table 1, CF-KRH is a Ca²⁺-free Krebs Ringer Hepes buffer, and the pH of the simulated body fluid is 7.4.

Details of the inks prepared in the production examples are shown below.

**[Table 1]**

| Production Example No. | Ink | Polymer | | Crosslinking factor | | Solvent |
|---|---|---|---|---|---|---|
| | | Type | Concentration | Type | Concentration | |
| Production Example 1 | Model material ink 1 | Sodium alginate | 1 w/v% | | | |
| Production Example 2 | Model material ink 2 | Sodium alginate | 2 w/v% | | | |
| Production Example 3 | Model material ink 3 | Polyglucuronic acid | 2 w/v% | | | |
| Production Example 4 | Support material ink 1 | Starch glue | 70 v/v% | Calcium chloride | 100 mM | |
| Production Example 5 | Support material ink 2 | Starch glue | 70 v/v% | Calcium chloride | 50 mM | |
| Production Example 6 | Support material ink 3 | Starch glue | 70 v/v% | Calcium chloride | 10 mM | |
| Production Example 7 | Support material ink 4 | Starch glue | 70 v/v% | | | |
| Production Example 8 | Support material ink 5 | Starch glue | 90 v/v% | Calcium chloride | 10 mM | |
| Production Example 9 | Support material ink 6 | Starch glue | 50 v/v% | Calcium chloride | 10 mM | |
| Production Example 10 | Enzyme solution 1 | α-Amylase | 1 mg/mL | | | CF-KRH |
| Production Example 11 | Enzyme solution 2 | α-Amylase | 1 mg/mL | | | Ultra-pure water |
| Production Example 12 | Enzyme solution 3 | α-Amylase | 1 mg/mL | | | Simulated body fluid |

### Examples 1 to 8 and Comparative Examples 1 and 2

The model material ink and the support material ink prepared in the combination of the production examples indicated in Table 2 were individually discharged onto a substrate to form a layer using a 3D printer (product name: BIO X available from Cellink). This process was repeated to stack layers, thereby producing a three-dimensional object with a hexagonal prism shape having a thickness of 1 mm, a height of 5 mm, and a side length of 6 mm. After standing still for five minutes, the structure with the support material was immersed in 15 mL of an enzyme solution prepared in the corresponding production example indicated in Table 2 at 37°C for three hours to remove the support material, thereby preparing a three-dimensional object of each example.

**[Table 2]**

| Example No. | Model material ink | Support material ink | Enzyme solution |
|---|---|---|---|
| Example 1 | Model material ink 1 | Support material ink 1 | Enzyme solution 1 |
| Example 2 | Model material ink 1 | Support material ink 3 | Enzyme solution 1 |
| Example 3 | Model material ink 2 | Support material ink 3 | Enzyme solution 2 |
| Example 4 | Model material ink 3 | Support material ink 5 | Enzyme solution 3 |
| Example 5 | Model material ink 3 | Support material ink 1 | Enzyme solution 3 |
| Example 6 | Model material ink 3 | Support material ink 6 | Enzyme solution 3 |
| Example 7 | Model material ink 3 | Support material ink 1 | Enzyme solution 3 |
| Example 8 | Model material ink 3 | Support material ink 2 | Enzyme solution 3 |
| Comparative Example 1 | Model material ink 1 | Support material ink 4 | Enzyme solution 1 |
| Comparative Example 2 | Model material ink 3 | Support material ink 4 | Enzyme solution 3 |

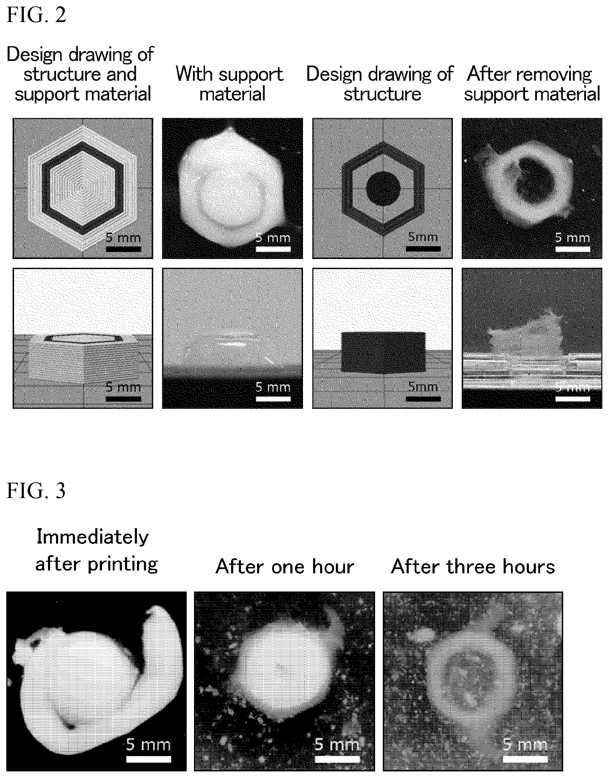

FIG. 2 shows a design drawing of a three-dimensional object prepared in Example 1 and photographs of the three-dimensional object before and after removing the support material. A three-dimensional structure could be prepared by ionic crosslinking, and also the support material could be removed using the enzyme.

FIG. 3 shows photographs of the three-dimensional object prepared in Example 1 immediately after printing, after one-hour immersion in the enzyme solution, and after three-hour immersion in the enzyme solution. Under the conditions in Example 1, the support material could be completely removed after three-hour immersion in the enzyme solution.

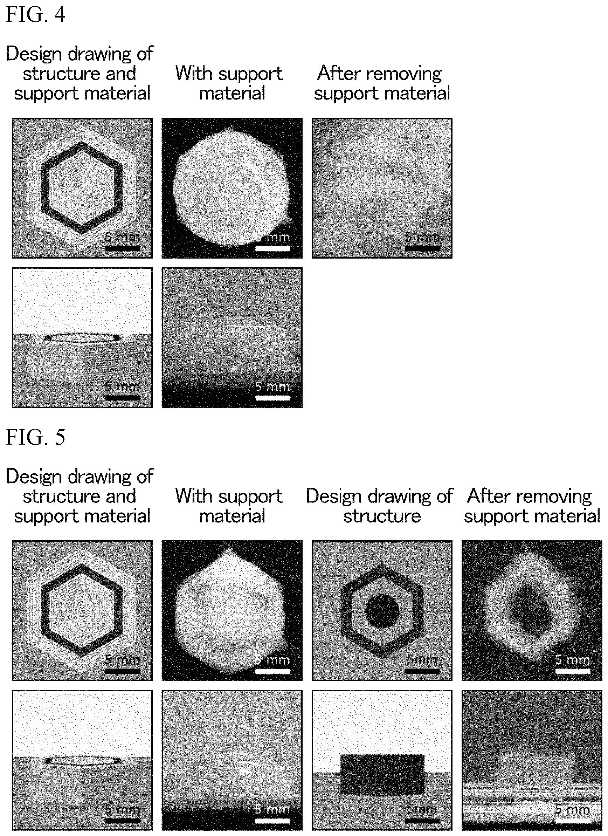

FIG. 4 shows a design drawing of a three-dimensional object prepared in Example 2 and photographs of the three-dimensional object before and after removing the support material. A three-dimensional structure could be prepared by ionic crosslinking as in Example 1 even when the Ca²⁺ concentration was 10 mM, and also the support material could be removed using the enzyme. Yet, the gel formation was insufficient due to the reduced Ca²⁺ concentration, lowering the fabrication accuracy.

FIG. 5 shows a design drawing of a three-dimensional object prepared in Comparative Example 1 and photographs of the three-dimensional object before and after removing the support material. Since the ionically crosslinkable polymer did not become a gel, the alginate solution was flowed out upon removing the support material, failing to prepare a three-dimensional object.

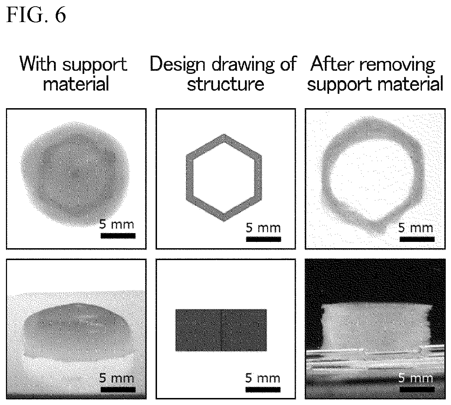

FIG. 6 shows a design drawing of a three-dimensional object prepared in Example 3 and photographs of the three-dimensional object before and after removing the support material. Using sodium alginate as an ionically crosslinkable polymer, a three-dimensional structure could be prepared by ionic crosslinking even when the concentration of the sodium alginate was 2.0 w/v% and the Ca²⁺ concentration was 10 mM, and also the support material could be removed using the enzyme.

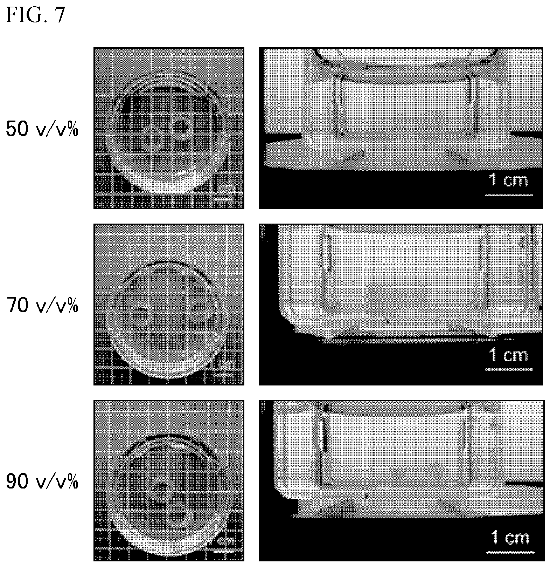

FIG. 7 shows photographs of three-dimensional objects prepared in Examples 4 to 6 and photographs of the three-dimensional objects before and after removing the support material. A decrease in the starch concentration in the support material ink reduced the viscosity, lowering the fabrication accuracy.

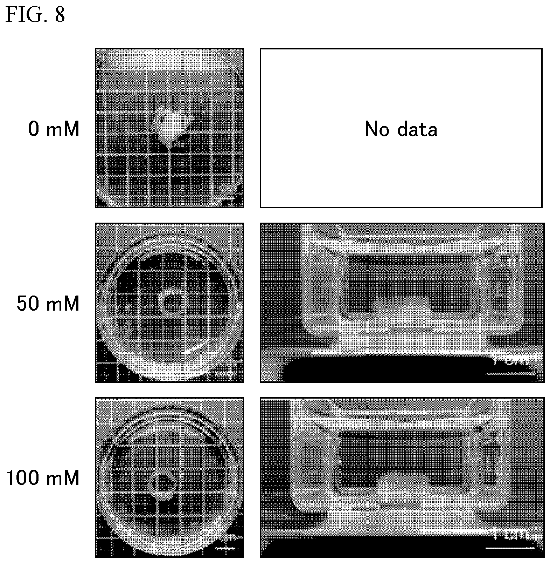

FIG. 8 shows photographs of three-dimensional objects prepared in Examples 7 and 8 and Comparative Example 2 and photographs of the three-dimensional objects before and after removing the support material. When the Ca²⁺ concentration was 50 mM or 100 mM, a three-dimensional structure could be prepared by ionic crosslinking as in Example 1, and also the support material could be removed using the enzyme.

The above results demonstrate that when producing complex-shaped objects made of soft materials, the production method of the present invention using an ionically crosslinkable polymer can be used to provide three-dimensional objects with good fabrication accuracy.

### REFERENCE SIGNS LIST

1, 11, 21, 31: support material ink
2, 12, 22, 32: model material ink
2A, 12A, 22A, 32A: three-dimensional object
2a, 12a, 22a, 32a: bridge
2b, 12b, 22b, 32b: hole
3a, 3b, 13a, 13b, 13c, 23a, 23b, 23c, 33a, 33b, 33c: nozzle
4, 14, 24, 34: substrate
5, 15, 25, 35: removal solution
11, 21, 31: first support material ink
11s, 21s, 31s: second support material ink

## Claims

1. A method for producing a three-dimensional object, the method comprising:
individually discharging (a) a model material ink containing an ionically crosslinkable polymer and (b) a support material ink containing a support material and a crosslinking factor;
curing the discharged ionically crosslinkable polymer; and
removing an object of the support material ink.

2. The method for producing a three-dimensional object according to claim 1,
wherein the support material contains an enzymatically degradable polymer.

3. The method for producing a three-dimensional object according to claim 2,
wherein the removing an object of the support material ink comprises removing the object of the support material ink (b) by interaction with an enzyme.

4. An ink set for producing a three-dimensional object, the ink set comprising:
(a) a model material ink containing an ionically crosslinkable polymer; and
(b) a support material ink containing a support material and a crosslinking factor.

5. The ink set for producing a three-dimensional object according to claim 4,
wherein the support material ink (b) contains an enzymatically degradable polymer.

6. A method for producing a three-dimensional object, the method comprising:
individually discharging (a) a model material ink containing a crosslinkable polymer and (b) a support material ink containing an enzymatically degradable polymer and a crosslinking factor;
crosslinking the discharged crosslinkable polymer; and
removing an object of the support material ink using an enzyme.

7. An ink set for producing a three-dimensional object, the ink set comprising:
(a) a model material ink containing a crosslinkable polymer; and
(b) a support material ink containing an enzymatically degradable polymer and a crosslinking factor.

8. An ink set for producing a three-dimensional object, the ink set comprising:
(a) a model material ink containing a crosslinkable polymer; and
(b) a support material ink containing an enzymatically degradable polymer,
the ink set being for use in forming a layered structure by alternately discharging the model material ink (a) and the support material ink (b).
